# EUROPEAN PATENT SPECIFICATION

(11) **EP 3 587 850 B1**
(45) Date of publication and mention of the grant of the patent: **07.12.2022**
(21) Application number: 18756737.5
(22) Date of filing: 23.02.2018
(51) Int. Cl.: F16D 65/56, F16D 51/22, F16D 65/22

(54) **DRUM BRAKE DEVICE**
TROMMELBREMSVORRICHTUNG
DISPOSITIF DE FREIN À TAMBOUR

(30) Priority: 23.02.2017 JP 2017032280
(43) Date of publication of application: 01.01.2020
(73) Proprietor: Akebono Brake Industry Co., Ltd., Tokyo 103-8534 (JP)
(72) Inventor: YOSHIKAWA, Kazuhiro, Tokyo 103-8534 (JP)
(74) Representative: Grünecker Patent- und Rechtsanwälte PartG mbB
(86) International application number: PCT/JP2018/006822
(87) International publication number: WO 2018/155657

(56) References cited:
- JP-A- S5 590 730
- JP-A- 2013 228 011
- US-A- 4 243 124
- US-A- 5 275 260
- US-B1- 6 234 280
- US-B1- 6 302 245
- US-B2- 7 945 368

## Description

### TECHNICAL FIELD

The present invention relates to a drum brake device.

### BACKGROUND ART

For example, in a vehicle, when a service brake is used to stop the vehicle and then a parking brake is operated and the service brake is released in this state, a part of a braking force may be lost. This is because when the vehicle is stopped on a slope or the like, the parking brake is applied and the service brake is released in this state, a torque is applied to the brake shoes, and a spreading force by a spreading mechanism (expansion/opening mechanism) is reduced by a fixed amount due to elastic deformation between components of the parking brake mechanism. Such a phenomenon is referred to as a so-called loose stroke in which a part of the braking force is lost. The loose stroke is particularly noticeable in a structure such as an electric parking brake which applies a tensile force to an operation lever of the spreading mechanism through an output member having a short length. And the loose stroke may be likely to lower the reliability of the parking brake.

Therefore, Patent Literature 1 discloses an electric parking brake that makes it difficult for the spreading force of the shoes to reduce (loosen) when a braking torque is applied. In the electric parking brake, an electric actuator (motor gear unit) is integrally assembled with the drum brake. The electric actuator (motor gear unit) propels a movable member by the power of the electric motor and pulls the output member. The output member pulls an input member of the drum brake to operate the spreading mechanism, and the spreading mechanism spreads the brake shoe and pushes the brake shoe against an inner peripheral surface of the drum. Further, a compression spring is interposed between the movable member and the output member.

According to the electric parking brake, since a propulsive force of the movable member is transmitted as a tensile force to the output member via the compression spring sandwiched between the movable member and the output member, the compression spring is compressed and an elastic restoring force is generated in the compression spring. An amount of compression of the spring is secured sufficiently larger than the loose stroke of the spreading mechanism when a torque is applied to the brake shoe by the electric parking brake. Therefore, the loss of the braking force can be prevented, and the braking force for parking can be maintained.

### CITATION LIST

### PATENT LITERATURE

[Patent Literature 1] JP-A-2015-152044
Further prior art can be found in US 4,243,124 A. This document discloses a drum brake adjuster including an adjustable strut with threadably engaged parts disposed between a pair of brake shoes to maintain a controlled spacing between the brake shoes. The adjuster includes an extendible member engaging one of the brake shoes and extending to lengthen the strut in response to the force of an adjusting spring. A pivot member engages the extendible member and the other brake shoe. The adjuster also includes a resilient member and a clutch device disposed between the extendible member and the pivot member. The resilient member and the clutch device cooperate to prevent change in the length of the strut unless brake lining wear occurs.

### SUMMARY OF INVENTION

### PROBLEM TO BE SOLVED BY INVENTION

However, since the electric parking brake of the conventional art has the compression spring mounted on a motor gear unit side, a spring stroke and a spring multiplier taking into account a parking lever ratio with respect to the amount of spreading of the shoe when loosening occurs, are required. Therefore, the motor gear unit becomes long in a pulling direction of the parking lever and becomes large in size. Further, the propulsive force of the movable member is transmitted as a tensile force to the output member such as a wire cable or a rod via the compression spring sandwiched between the movable member and the output member. Therefore, there is a disadvantage that the elastic force of the compression spring is reduced due to the deformation of the output member and the like, and the efficiency of preventing the loosening of the shoe spreading force is likely to be lowered.

The present invention is made in view of the above situation, and an object thereof is to provide a drum brake device including a parking brake mechanism capable of preventing loosening of a shoe spreading force with high efficiency at a time of a parking operation while preventing a motor gear unit from becoming large in size.

### MEANS FOR SOLVING PROBLEM

The above object of the present invention is achieved by the following constitutions.
(1) A drum brake device including: a parking brake mechanism which includes: a pair of brake shoes disposed in an expandable/openable manner on a surface parallel to a backing plate so as to respectively face an inner peripheral surface of a brake drum; an adjuster interposed between adjacent ends of the pair of brake shoes on one side and automatically adjusting a shoe interval between the inner peripheral surface of the brake drum and the brake shoes; and an expansion/opening mechanism which is interposed between one of the pair of brake shoes and one end of the adjuster and which expands and opens the pair of brake shoes by a thrust force of an operation lever to which an external force is applied, wherein an elastic member which bends along an expansion/opening direction of the pair of brake shoes and biases the pair of brake shoes in the expansion/opening direction at a time of a parking operation, is disposed in the adjuster.

According to the drum brake device including the parking brake mechanism of the configuration (1), the elastic member is disposed in the adjuster. The elastic member bends along the expansion/opening direction of the pair of brake shoes (the elastic member biases the pair of brake shoes in the expansion/opening direction). And in the adjuster, an acting direction of force is disposed in series with respect to the expansion/opening mechanism disposed between the pair of brake shoes. Therefore, it is not necessary to mount a conventional compression spring on a motor gear unit. Thus, the motor gear unit does not lengthen in the pulling direction of the operation lever.

Further, the elastic member is disposed in the adjuster disposed in series with the expansion/opening mechanism, so that the elastic force may be directly applied to the loosening of the shoe spreading force. Therefore, a reduction of the elastic force due to the deformation of the output member such as a wire cable or a rod is less likely to occur, and the elastic force of the elastic member may be applied for the prevention of the loose stroke with high efficiency.

(2) The drum brake device according to (1), wherein the elastic member is energized and disposed.

According to the drum brake device of the configuration (2), the loss stroke at the time of parking operation may be reliably reduced by providing the elastic member with a preload for biasing the pair of brake shoes in the expansion/opening direction.

(3) The drum brake device according to (2), wherein the adjuster includes an adjuster nut disposed on one side of the pair of brake shoes, an adjuster screw having one end screwed to the adjuster nut, a set member screwed to the other end of the adjuster screw, and an adjuster socket disposed on the other side of the pair of brake shoes, and wherein the elastic member is held in an energized state via a set plate which forms a clearance in the axial direction between the set member and the adjuster socket.

According to the drum brake device of the configuration (3), the elastic member interposed between the adjuster screw and the set plate is screwed in a direction in which the set member approaches the adjuster screw, so the elastic member is compressed (energized) via the set plate. That is, the elastic restoring force due to the compression of the elastic member moves the set plate in a direction of the adjuster socket and causes the set plate to abut against the set member. Therefore, the elastic member is preloaded at a time of assembly. Thus, the preload of the elastic member may be easily adjusted by rotating the set member, and an assembling operation of the adjuster does not become complicated.

In addition, the adjuster socket can press the set plate against the preload that is applied to the elastic member. That is, the adjuster socket abutting against the set plate has a backward margin due to the clearance in the axial direction formed between the adjuster socket and the set member, and the elastic member can be compressed. Therefore, the adjuster is configured such that the adjuster socket pushes the set plate to bend the elastic member to generate a larger elastic force at the time of parking operation. Since the accumulated elastic force of the elastic member is applied to the expansion/opening mechanism itself which spreads at the time of parking operation, the elastic force may be directly applied to the loosening of the shoe spreading force.

(4) The drum brake device according to any one of the (1) to (3), wherein the elastic member is a disc spring.

According to the drum brake device of the configuration (4), the disc spring is used as the elastic member, so that a required elastic force in the axial direction may be easily adjusted in a short mounting space compared to the coil spring by the number and combination of disc springs. The combination of disc springs may be a combination in parallel overlapping in the same direction, a combination in serial overlapping back and back, or belly and belly, or a mixed combination thereof.

### EFFECT OF INVENTION

According to the drum brake device having the parking brake mechanism according to the present invention, it is possible to prevent the loosening of the shoe spreading force at the time of parking operation with high efficiency while preventing the motor gear unit from becoming large in size.

The present invention is briefly described above. Furthermore, details of the present invention will be further clarified by reading modes (hereinafter, referred to as "embodiments") for carrying out the invention described below with reference to the attached drawings.

### BRIEF DESCRIPTION OF DRAWINGS

[FIG. 1] FIG. 1 is a front view of a drum brake device including a parking brake mechanism according to a first embodiment of the present invention.
[FIG. 2] FIG. 2 is a sectional view which is taken along line A-A of FIG. 1.
[FIG. 3] FIG. 3(a) is a perspective view of an expansion/opening mechanism illustrated in FIG. 2, and FIG. 3(b) is a front view of FIG. 3(a).
[FIG. 4] FIG. 4(a) is a perspective view of an adjuster illustrated in FIG. 3, and FIG. 4(b) is an exploded perspective view of FIG. 4(a).
[FIG. 5] FIG. 5(a) is a sectional view of the adjuster at a time of assembly, and FIG. 5(b) is a sectional view of the adjuster at a time of parking operation.
[FIG. 6] FIG. 6(a) is an enlarged sectional view of a main portion of the adjuster at the time of assembly, and FIG. 6(b) is an enlarged sectional view of the main portion of the adjuster at the time of parking operation.
[FIG. 7] FIG. 7 is a front view of a drum brake device including a parking brake mechanism according to a second embodiment of the present invention.
[FIG. 8] FIG. 8 is a sectional view which is taken along line B-B in FIG. 7.
[FIG. 9] FIG. 9 is a perspective view of the drum brake device illustrated in FIG. 7.
[FIG. 10] FIG. 10(a) is a perspective view of an expansion/opening mechanism illustrated in FIG. 9, and FIG. 10(b) is an exploded perspective view of FIG. 10 (a).
[FIG. 11] FIG. 11 is a front view of a drum brake device according to a third embodiment of the present invention.
[FIG. 12] FIG. 12 is a plan view of a pair of brake shoes and an expansion/opening mechanism illustrated in FIG. 11.
[FIG. 13] FIG. 13 is a perspective view of an adjuster and an operation lever illustrated in FIG. 12.

### EMBODIMENTS OF INVENTION

Hereinafter, embodiments according to the present invention will be described with reference to the drawings.

### [First Embodiment]

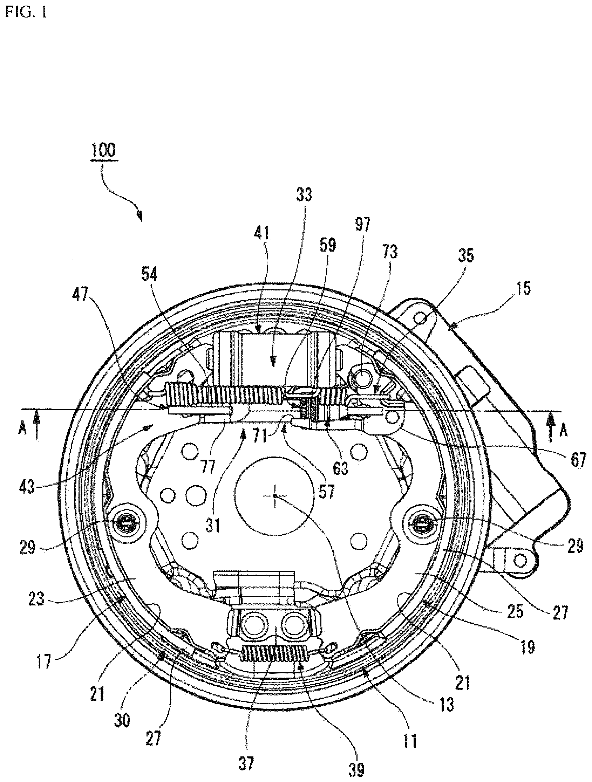

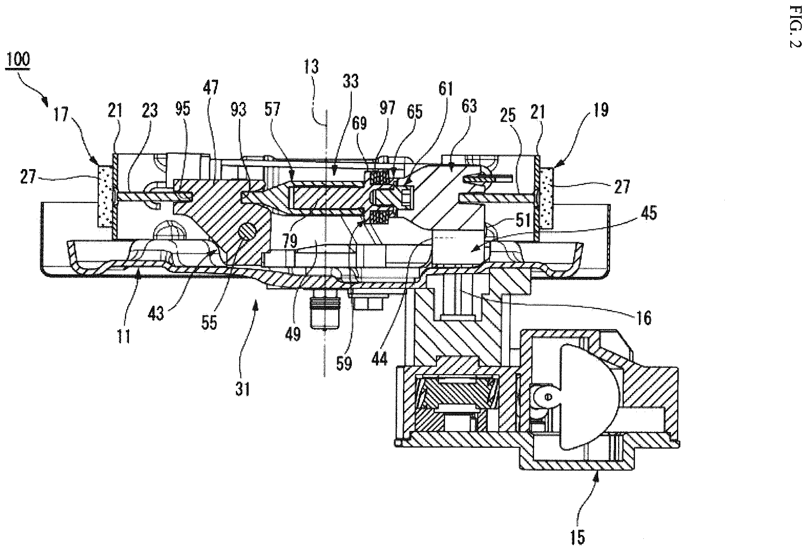

As illustrated in FIGS. 1 and 2, a drum brake device 100 including a parking brake mechanism 31 according to a first embodiment of the present invention is integrally fixed to a vehicle body in a posture in which a backing plate 11 is substantially perpendicular to a wheel rotation axis 13. The backing plate 11 is formed with a predetermined strength by raising an outer peripheral edge portion of a circular substrate made of a thick metal plate as a peripheral wall. As illustrated in FIG. 2, a motor gear unit 15 for motorizing a parking brake is provided on a surface of the backing plate 11 on a vehicle side. A pair of first brake shoe 17 and second brake shoe 19 each having an arc shape is disposed on the backing plate 11 along an outer peripheral edge in a vehicle front and rear direction (left and right direction in FIG. 1).

In the first brake shoe 17 and the second brake shoe 19 disposed on the backing plate 11, a first web 23 and a second web 25 are respectively fixed to an inner periphery a back plate 21, and a lining 27 is fixed to an outer periphery of the back plate 21 (see FIG. 2). The first web 23 and the second web 25 face each other across a diameter of a virtual circle (not illustrated) centered on the wheel rotation axis 13 perpendicular to the backing plate 11 and are formed in an arc shape on a surface parallel to the backing plate 11.

The first brake shoe 17 and the second brake shoe 19 are respectively held by shoe hold-down devices 29 in an expandable/openable manner on the backing plate 11. The first brake shoe 17 and the second brake shoe 19 are disposed to face the inner peripheral surface of the brake drum 30 across the wheel rotation axis 13 in an expandable/openable manner on a surface parallel to the backing plate 11.

As illustrated in FIG. 1, an expansion/opening mechanism 43 and an adjuster 33 which constitute the parking brake mechanism 31, and a return spring 35 are respectively disposed substantially horizontally between end portions of the first brake shoe 17 and the second brake shoe 19 on one side (specifically, between upper end portions of FIG. 1). On the other hand, an anchor portion 37 and a tension coil spring 39 are disposed substantially horizontally between the end portions of the first brake shoe 17 and the second brake shoe 19 on the other side (specifically, between lower end portions of FIG. 1). The anchor portion 37 is fixed to the backing plate 11, and end portions of the first brake shoe 17 and the second brake shoe 19 on the other side abut against the anchor portion 37.

Furthermore, a wheel cylinder 41 is interposed between the end portions of the first brake shoe 17 and the second brake shoe 19 on one side on the upper side of FIG. 1. The wheel cylinder 41 is attached to the backing plate 11 and pushes the end portions on one side by a first piston and a second piston in a separating direction, to expand and open the first brake shoe 17 and the second brake shoe 19. The wheel cylinder 41 expands and rotates the first brake shoe 17 and the second brake shoe 19 around an abutting point with the anchor portion 37 by the first piston and the second piston advancing from both ends at the time of service brake by stepping on a foot brake pedal. The expanded and rotated first brake shoe 17 and second brake shoe 19 frictionally engage with the inner peripheral surface of the brake drum 30 to brake the brake drum 30.

That is, the drum brake device 100 according to the first embodiment has a leading trailing structure in which an upper portion is opened with the anchor portion 37 of the lower portion as a fulcrum.

FIG. 2 is a sectional view which is taken along line A-A of FIG. 1. The parking brake mechanism 31 includes the expansion/opening mechanism 43 and a drive member 45 driven by the motor gear unit 15. The expansion/opening mechanism 43 includes a pressing member 47 and an operation lever 49. In the expansion/opening mechanism 43, the pressing member 47 is interposed between one (first brake shoe 17) of the pair of brake shoes and one end of the adjuster 33. The expansion/opening mechanism 43 expands and opens the pair of first brake shoe 17 and the second brake shoe 19 via the adjuster 33 by the thrust force of the operation lever 49 to which the external force is applied.

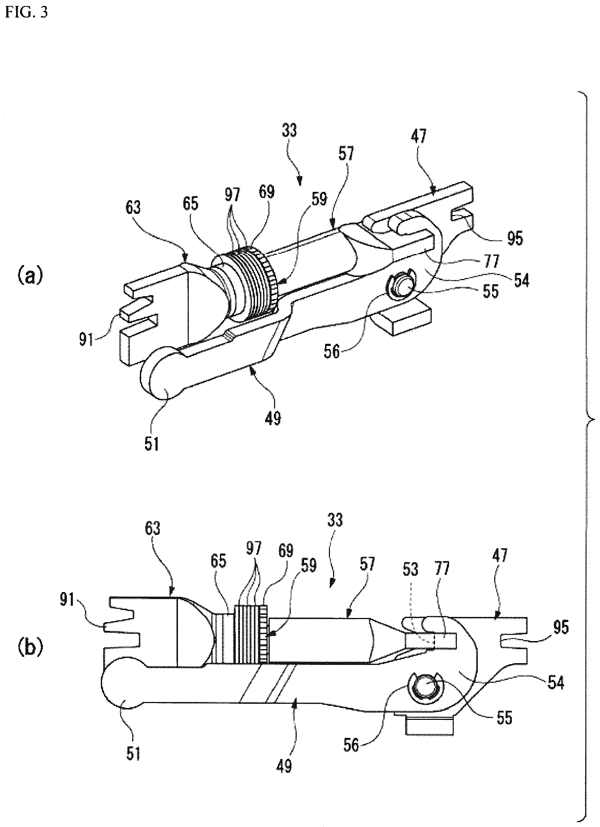

As illustrated in FIGS. 3(a) and 3(b), in the operation lever 49, a rotary base 54 is rotatably supported by the pressing member 47 via a lever pin 55. The lever pin 55 has a head portion, and an insertion tip on an opposite side of the head portion penetrates the pressing member 47 and the rotary base 54, and a snap ring 56 is attached to the penetration tip to restrict detachment thereof.

Further, in the operation lever 49, a lever input portion 51 is disposed between the second web 25 and the backing plate 11. Also, in the operation lever 49, a lever pressing portion 53 (see FIG. 3(b)) is disposed on the opposite side of the lever input portion 51 with the wheel rotation axis 13 interposed therebetween. Therefore, the operation lever 49 takes a long distance from a pivot fulcrum (lever pin 55) to a power point (lever input portion 51). An external force is applied to the lever input portion 51 of the operation lever 49, and the rotary base 54 around the lever pin 55 is rotated in a clockwise direction of FIG. 2, so that the lever pressing portion 53 (see FIG. 3(b)) presses the adjuster 33 to a right direction in FIG. 2. The expansion/opening mechanism 43 presses the first web 23 in a left direction in FIG. 2 with a reaction force via the pressing member 47, to expands and opens the first brake shoe 17 and the second brake shoe 19.

In the drum brake device 100 according to the first embodiment, the drive member 45 is driven by the output member 16 of the motor gear unit 15. The external force is applied to the lever input portion 51 by the drive member 45. The drive member 45 is driven in a direction perpendicular to a surface parallel to the backing plate 11. That is, the parking brake mechanism 31 of the drum brake device 100 is a cross-pull type.

The drive member 45 is formed in a rectangular box shape having a lever insertion opening 44. The lever input portion 51 is inserted into the lever insertion opening 44 with play to be in an engaged state, and the operation lever 49 is connected to the drive member 45.

The adjuster 33 is interposed between adjacent ends of the pair of first brake shoe 17 and the second brake shoe 19 on one side (upper side in FIG. 1), and automatically adjusts a shoe interval between the inner peripheral surface of the brake drum 30 and the brake shoe.

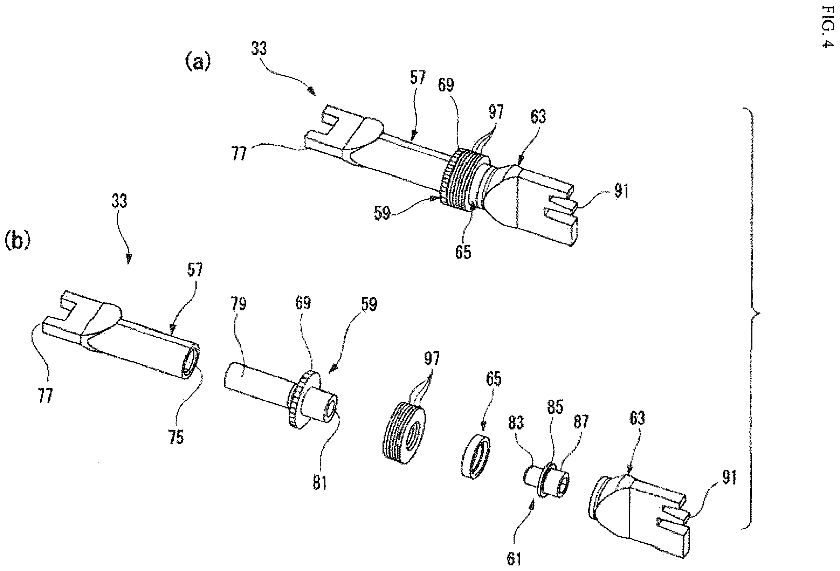

As illustrated in FIGS. 4(a) and 4(b), the adjuster 33 includes an adjuster nut 57, an adjuster screw 59, a set member 61, an adjuster socket 63, a plurality of disc springs 97 as elastic members, a set plate 65, and an adjuster lever 67. The adjuster nut 57 is disposed on one side of the pair of brake shoes (on the side of the first brake shoe 17). One end of the adjuster screw 59 is screwed into the adjuster nut 57. The set member 61 is screwed to the other end of the adjuster screw 59. The adjuster socket 63 is disposed on the other side of the pair of brake shoes (on the side of the second brake shoe 19).

The adjuster screw 59 extends and contracts an entire length of the adjuster 33 by rotation to make the brake shoe interval variable. One end of the adjuster screw 59 is screwed into the adjuster nut 57, the other end thereof is inserted into the adjuster socket 63 via the set member 61, and a toothed wheel 69 is formed in a middle portion thereof. The adjuster lever 67 has a claw portion 71 facing the toothed wheel 69, and rotates in the clockwise direction in FIG. 1 around the adjuster pin 73 when the first brake shoe 17 and the second brake shoe 19 are expanded and opened. Thus, the claw portion 71 is configured to abut against the toothed wheel 69.

In the automatic shoe interval adjustment operation by the adjuster 33, the return spring 35 always exerts a force for rotating the adjuster lever 67 in the clockwise direction in FIG. 1 about the adjuster pin 73. When an amount of wear of the lining 27 increases, the first brake shoe 17 and the second brake shoe 19 move by more than a prescribed stroke, and accordingly, an amount of rotation of the adjuster lever 67 exceeds a prescribed amount. Then, a claw portion 71 abuts against one tooth of the toothed wheel 69, and rotates the toothed wheel 69 by one tooth. Therefore, the adjuster 33 performs automatic adjustment of the shoe clearance by extending. The adjuster 33 separates standby positions of the first brake shoe 17 and the second brake shoe 19 at the time of non-braking, and maintains the shoe clearance (total dimensions of shoe clearances on both sides) substantially constant, by making an entire length dimension longer.

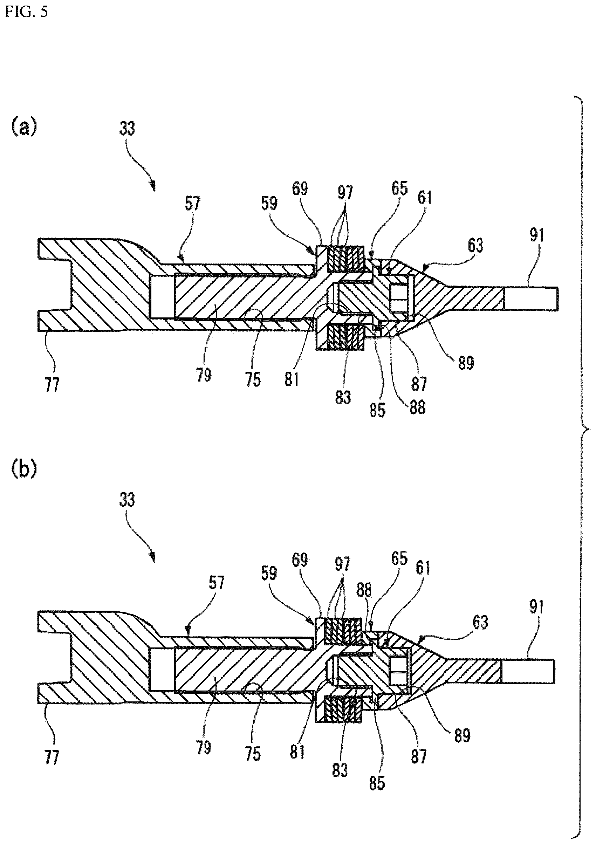

The adjuster nut 57 has a lever/pressing portion engagement claw 77 which engages with the pressing member 47 and the lever pressing portion 53, on the opposite side of the gear screwing portion 75 in which the adjuster screw 59 is screwed. In the adjuster screw 59, an opposite side of a male screw portion 79 with the toothed wheel 69 interposed therebetween is a female screw portion 81 to be screwed to the set member 61. The annular set plate 65 is movably externally inserted to an outer periphery of the female screw portion 81. The male screw portion 83 of the set member 61 is screwed into the female screw portion 81 of the adjuster screw 59. A flange portion 85 is formed on the set member 61, and the flange portion 85 restricts detachment of the set plate 65 from the adjuster screw 59. In the set member 61, an insertion portion 87 on the opposite side of the male screw portion 83 with the flange portion 85 interposed therebetween is inserted into the adjuster socket 63. The adjuster socket 63 has a web engagement claw 91 engaging with the second web 25 on an opposite side of the insertion hole 89 (see FIGS. 5(a) and 5(b)) into which the insertion portion 87 of the set member 61 is inserted. Further, the pressing member 47 includes a nut engagement portion 93 (see FIG. 2) engaging with the lever/pressing portion engagement claw 77, and a web engagement claw 95 engaging with the first web 23 is formed on an opposite side of the nut engagement portion 93.

In the first embodiment, a plurality of disc springs 97 are used as elastic members disposed in the adjuster 33. The disc spring 97 bends in the expansion/opening direction of the pair of first brake shoe 17 and the second brake shoe 19 at the time of parking operation (that is, the disc spring 97 biases the pair of first brake shoe 17 and the second brake shoe 19 in the expansion/opening direction). The disc spring 97 is held in an energized state via the set plate 65 which forms a clearance 88 in the axial direction between the set member 61 and the adjuster socket 63. That is, as illustrated in FIG. 5(a), since the set plate 65 is fixed by the set member 61 when the adjuster 33 is assembled, the disc springs 97 are preloaded. Further, as illustrated in FIG. 5(b), in the adjuster 33, the adjuster socket 63 pushes the set plate 65 and further bends the disc spring 97, at the time of parking operation.

Next, an operation of the above configuration will be described.

In the drum brake device 100 including the parking brake mechanism 31 according to the first embodiment, the disc springs 97 are disposed in the adjuster 33. The disc springs 97 bend along the expansion/opening direction of the pair of first brake shoe 17 and second brake shoe 19 (the disc springs 97 bias the pair of first brake shoe 17 and second brake shoe 19 in the expansion/opening direction). In the adjuster 33, an acting direction of a force is disposed in series with respect to the expansion/opening mechanism 43 disposed between the pair of first brake shoe 17 and the second brake shoe 19. Therefore, in the drum brake device 100 including the parking brake mechanism 31, there is no need to mount a compression spring as in the conventional art on the motor gear unit 15. Thus, the motor gear unit 15 does not become long in the pulling direction of the operation lever 49.

Further, it is possible to directly apply an elastic force to the loosening of the shoe spreading force by disposing the disc springs 97 in the adjuster 33 disposed in series with the expansion/opening mechanism 43. Therefore, the reduction of the elastic force due to the deformation of the output member 16 such as a wire cable or a rod is less likely to occur, and the elastic force of the disc spring 97 can be applied for the prevention of the loose stroke with high efficiency.

Further, in the drum brake device 100 including the parking brake mechanism 31 according to the first embodiment, the disc spring 97 is provided with a preload that biases the pair of first brake shoe 17 and second brake shoe 19 in the expansion/opening direction, so that the loss stroke can be reliably reduced at the time of parking operation.

In the drum brake device 100 including the parking brake mechanism 31 according to the first embodiment, as described above, the set member 61 is screwed to the adjuster screw 59. The set plate 65 is externally inserted to the outer periphery of the adjuster screw 59 so as to be movable in the axial direction. The detachment of the set plate 65 from the outer periphery of the adjuster screw 59 is restricted by the set member 61.

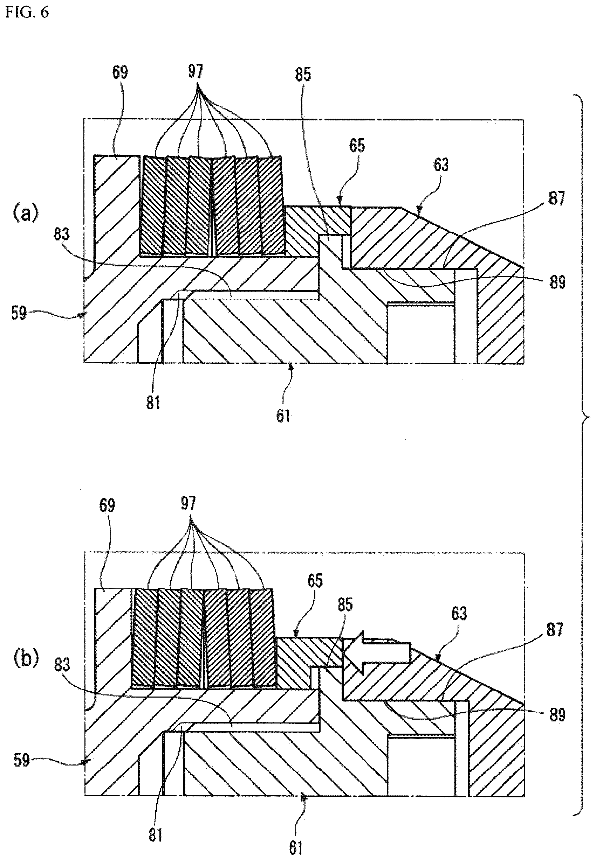

The disc springs 97 interposed between a side surface of the toothed wheel 69 in the adjuster screw 59 and the set plate 65 are screwed in a direction in which the set member 61 approaches the adjuster screw 59, so the disc springs 97 are compressed (energized) via the set plate 65. That is, an elastic restoring force due to the compression of the disc springs 97 moves the set plate 65 in the direction of the adjuster socket 63 and makes the set plate 65 abut against the flange portion 85 of the set member 61. Therefore, the disc spring 97 is preloaded at the time of assembly illustrated in FIG. 6(a). Thus, the preload of the disc spring 97 can be easily adjusted by rotating the set member 61, and assembly work of the adjuster 33 does not become complicated. Therefore, there is no concern that an assembling workability of the drum brake device 100 is lowered and the manufacturing cost is increased.

Further, the adjuster socket 63 can press the set plate 65 against the preload that is applied to the disc spring 97. That is, as illustrated in FIG. 6(a), the adjuster socket 63 abutting against the set plate 65 has a backward margin due to the clearance 88 in the axial direction formed between the adjuster socket 63 and the flange portion 85 of the set member 61, and the disc spring 97 is capable of being compressed. Therefore, the adjuster 33 is configured such that the adjuster socket 63 pushes the set plate 65 to bend the disc spring 97 to generate a larger elastic force at the time of parking operation illustrated in FIG. 6(b). Since the accumulated elastic force of the disc spring 97 is applied to the expansion/opening mechanism 43 itself spreading at the time of parking operation, the elastic force can be directly applied to the loosening of the shoe spreading force.

In a vehicle equipped with the drum brake device 100 including the parking brake mechanism 31 according to the first embodiment, when the vehicle is stopped by the service brake and then the parking brake is operated, the thrust force of the operation lever 49 in the expansion/opening mechanism 43 causes the adjuster socket 63 to push the set plate 65 to bend the disc spring 97. So, the elastic force is accumulated as illustrated in FIG. 6 (b). In this state, when the service brake is released, a part of the braking force tends to disappear due to the elastic deformation between the components of the parking brake mechanism 31. But the elastic force of the disc springs 97 accumulated at the same time is released. Therefore, as illustrated in FIG. 6(a), the elastic force is applied to the loosening of the shoe spreading force to suppress the loss of the braking force. As a result, the loose stroke can be reduced.

Furthermore, in the drum brake device 100 including the parking brake mechanism 31 according to the first embodiment, by using the disc spring 97 as an elastic member, a required elastic force in the axial direction can be easily adjusted in a short mounting space compared to a coil spring depending on the number and combination of disc springs 97. The combination of the disc springs 97 can be a combination in parallel in which a plurality of sheets are stacked in the same direction, a combination in serial in which back and back, or belly and belly are stacked, or a mixed combination thereof as in the first embodiment. Of course, the elastic member of the present invention is not limited to the disc spring 97, and various forms of elastic members such as a coil spring can be used.

### [Second Embodiment]

Next, a second embodiment of the drum brake device according to the present invention will be described.

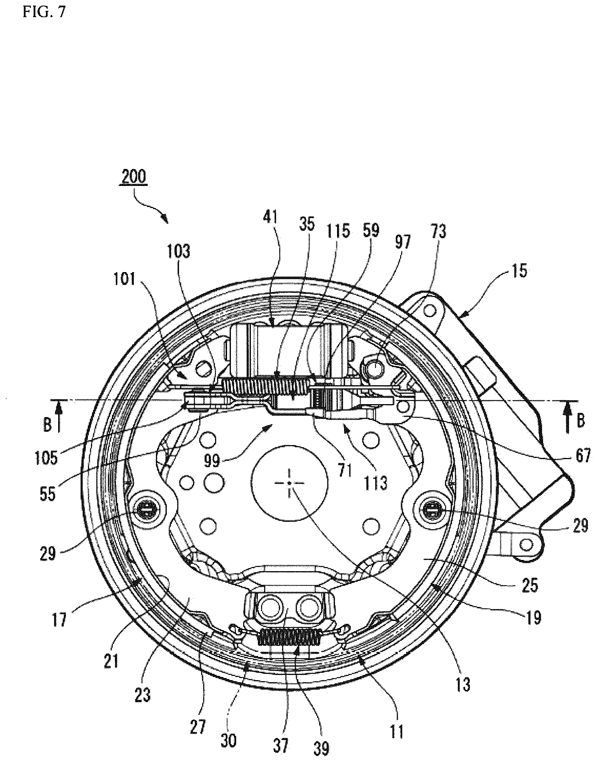

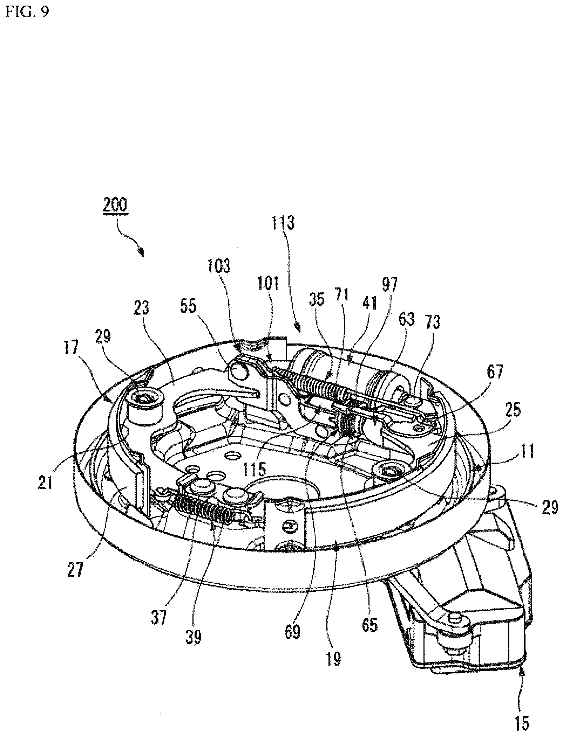

Except for a parking brake mechanism 99, as illustrated in FIGS. 7 to 9, a backing plate 11, an anchor portion 37, a motor gear unit 15, a drive member 45, a wheel cylinder 41, a return spring 35, and a tension coil spring 39 of a drum brake device 200 having the parking brake mechanism 99 according to the second embodiment of the present invention are substantially the same as those of the drum brake device 100 according to the first embodiment. Therefore, in the following description, the parking brake mechanism 99 will be mainly described in detail, and description of the other configurations of the drum brake device 200 equivalent to the above-described drum brake device 100 will be omitted.

The parking brake mechanism 99 according to the second embodiment includes an expansion/opening mechanism 101 and a drive member 45 driven by a motor gear unit 15. The expansion/opening mechanism 101 includes a support member 103 and an operation lever 105. The expansion/opening mechanism 101 is interposed between one (first brake shoe 17) of a pair of brake shoes and one end of an adjuster 113. And a thrust force of the operation lever 105 to which an external force is applied expands and opens the pair of first brake shoe 17 and second brake shoe 19.

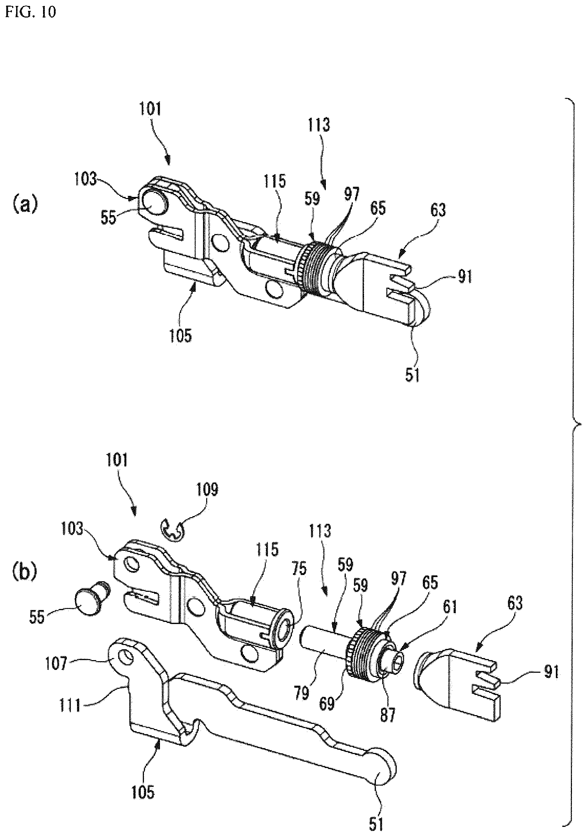

As illustrated in FIG. 10, the operation lever 105 in the expansion/opening mechanism 101 has the rotation base 107 rotatably supported by a support member 103 via a lever pin 55. The lever pin 55 has a head portion, and an insertion tip on the opposite side of the head portion penetrates the support member 103 and the rotary base 107, and a snap ring 109 is attached to the penetration tip to restrict detachment thereof.

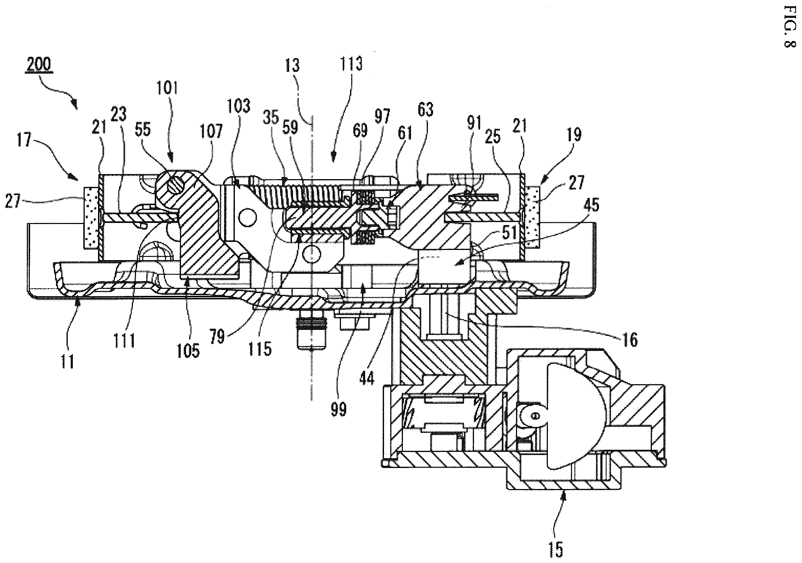

The operation lever 105 has a projection-shaped lever pressing portion 111 on an outer periphery in a vicinity of the rotary base 107. The lever pressing portion 111 directly abuts against an inner peripheral end surface of a first web 23 in the first brake shoe 17 (see FIG. 8). In the operation lever 105, the lever input portion 51 is disposed between a second web 25 and a backing plate 11 on the opposite side of the lever pressing portion 111. In the operation lever 105, when an external force is applied to the lever input portion 51 and the rotary base 107 is rotated in the clockwise direction in FIG. 8, the lever pressing portion 111 of the operation lever 105 presses the first web 23 to expand and open the first brake shoe 17 and the second brake shoe 19.

The drum brake device 200 according to the second embodiment includes an adjuster 113 for automatically adjusting a shoe interval. The adjuster 113 is disposed between the expansion/opening mechanism 101 and the second web 25. The adjuster 113 includes an adjuster nut 115, an adjuster screw 59, a set member 61, an adjuster socket 63, a plurality of disc springs 97 which are elastic members, and a set plate 65. The adjuster nut 115 of the second embodiment is fixed to the support member 103 of the expansion/opening mechanism 101. Other components of the adjuster are the same as the adjuster 33 of the first embodiment.

Next, an operation of the above configuration will be described. In the drum brake device 200 including the parking brake mechanism 99 according to the second embodiment, the lever pressing portion 111 of the operation lever 105 abuts against the first web 23 on one side. At the time of parking operation, when an external force is applied to the lever input portion 51 and the rotary base 107 is rotated, the lever pressing portion 111 directly presses the first web 23 on one side, to expand and open the first brake shoe 17 and the second brake shoe 19.

Similar to the adjuster 33 of the first embodiment, the adjuster 113 is configured such that the adjuster socket 63 pushes the set plate 65 to bend the disc springs 97 to generate a large elastic force at the time of parking operation. The accumulated elastic force of the disc springs 97 is applied to the expansion/opening mechanism 101 itself spreading at the time of parking operation, so that the elastic force can be directly applied to the loosening of the shoe spreading force.

Therefore, also in a vehicle equipped with the drum brake device 200 having the parking brake mechanism 99 according to the second embodiment, when the vehicle is stopped by the service brake and then the parking brake is operated, the thrust force of the operation lever 105 in the expansion/opening mechanism 101 causes the adjuster socket 63 to push the set plate 65 to bend the disc springs 97, and thereby the elastic force is accumulated. In this state, when the service brake is released, a part of the braking force tends to disappear due to the elastic deformation between the components of the parking brake mechanism 99, but the elastic force of the disc springs 97 accumulated at the same time is released. The elastic force is applied to the loosening of the shoe spreading force to suppress the loss of the braking force. As a result, the loose stroke can be reduced.

### [Third Embodiment]

Next, a third embodiment of the drum brake device according to the present invention will be described.

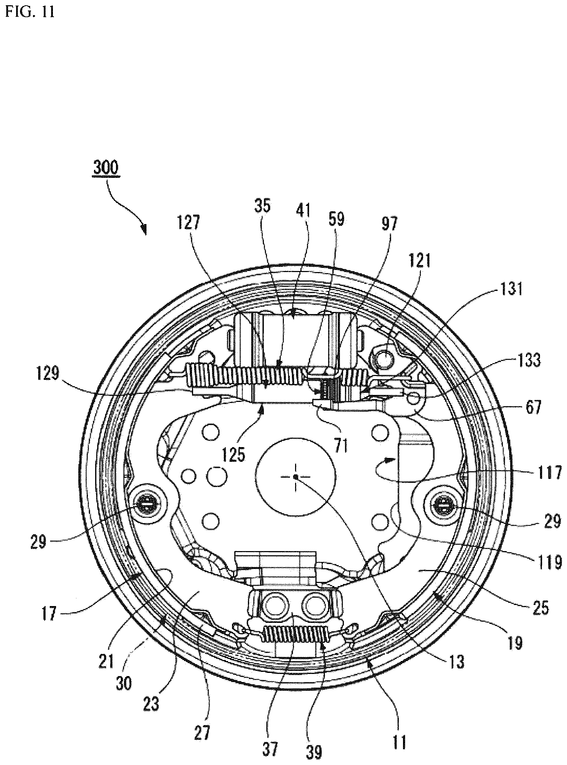

As illustrated in FIG. 11, in a drum brake device 300 having a parking brake mechanism 117 according to the third embodiment of the present invention, the parking brake mechanism 117 is a forward-pull type. In the drum brake device 300, except for the parking brake mechanism 117, basic structures such as a backing plate 11, an anchor portion 37, a wheel cylinder 41, a return spring 35, and a tension coil spring 39 are substantially the same as those of the drum brake device 100 described above. Therefore, in the following description, the parking brake mechanism 117 will be mainly described in detail, and the description of the other configurations of the drum brake device 300 will be omitted.

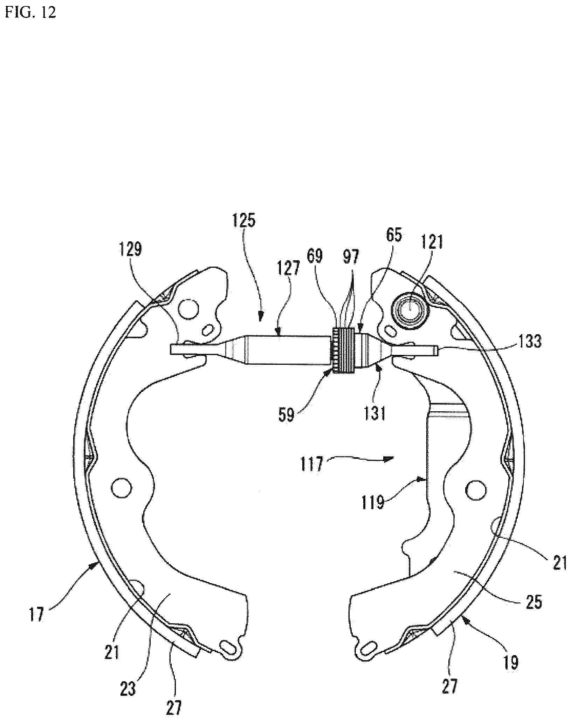

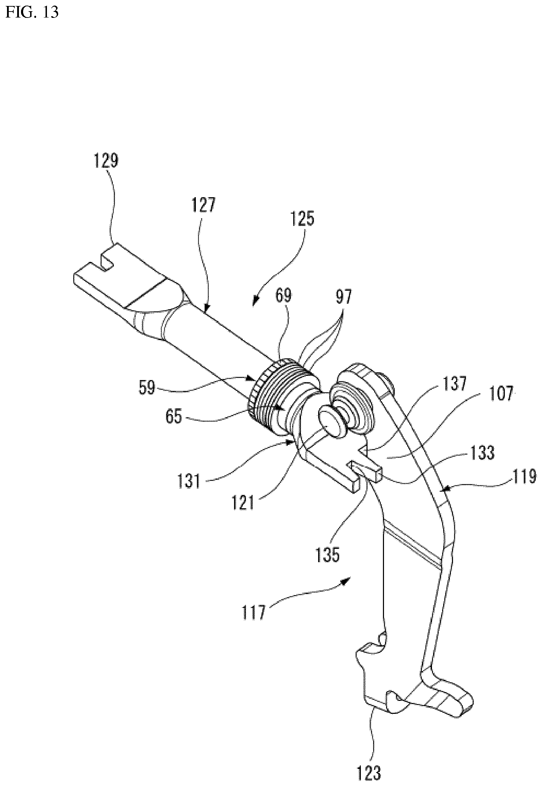

As illustrated in FIGS. 12 and 13, the parking brake mechanism 117 according to the third embodiment includes a parking lever 119 as an operation lever. The parking lever 119 serves as the expansion/opening mechanism itself. One end of the parking lever 119 is rotatably supported by a parking lever pin 121 on a second web 25 of a second brake shoe 19. The adjuster lever 67 is coaxially rotatably supported by the parking lever pin 121. In the parking lever 119, a manual parking cable (not illustrated) and a drive member of a motor gear unit are connected to a lever input portion 123.

In the parking brake mechanism 117, an external force is applied to the lever input portion 123 of the parking lever 119 in response to a parking brake operation. The parking lever 119 is driven in a direction along a surface parallel to the backing plate 11. That is, in the drum brake device 300, the parking brake mechanism 117 is the forward-pull type.

In the parking brake mechanism 117 according to the third embodiment, an adjuster 125, which is substantially the same as the adjuster 33 used in the parking brake mechanism 31 of the first embodiment, is used. In the adjuster 125, the adjuster nut 127 includes a web engagement claw 129 engaging with the first web 23. Further, the adjuster socket 131 includes a web engagement claw 133 engaging with the second web 25. Therefore, the adjuster 125 is disposed substantially horizontally between end portions of the first brake shoe 17 and the second brake shoe 19 on one side (specifically, between end portions on an upper side in FIG. 11).

The web engagement claw 133 of the adjuster socket 131 is formed with a web recess portion 135 and a lever recess portion 137. Both ends of the adjuster 125 are disposed between end portions of the first brake shoe 17 and the second brake shoe 19 on one side, and a rotary base 107 of the parking lever 119 is engaged with the lever recess portion 137 of the adjuster socket 131.

Next, an operation of the above configuration will be described.

In the drum brake device 300 including the parking brake mechanism 117 according to the third embodiment, the rotary base 107 of the parking lever 119 rotatably supported by the second web of the second brake shoe 19 abuts against the web engagement claw 133 of the adjuster socket 131. At the time of parking operation, when an external force is applied to the lever input portion 123 and the rotary base 107 is rotated, the rotary base 107 presses the adjuster socket 131 toward the first brake shoe 17, to expand and open the first brake shoe 17 and the second brake shoe 19.

Similar to the adjuster 33 of the first embodiment, the adjuster 125 is configured such that the adjuster socket 131 pushes the set plate 65 to bend the disc springs 97 to generate a large elastic force at the time of parking operation. Since the accumulated elastic force of the disc springs 97 is applied to the parking lever 119 itself spreading at the time of parking operation, the elastic force can be directly applied to the loosening of the shoe spreading force.

Therefore, also in a vehicle equipped with the drum brake device 300 including the parking brake mechanism 117 according to the third embodiment, when the vehicle is stopped by the service brake and then the parking brake is operated, the thrust force of the parking lever 119 causes the adjuster socket 131 to push the set plate 65 to bend the disc springs 97, and thereby the elastic force is accumulated. In this state, when the service brake is released, a part of the braking force tends to disappear due to the elastic deformation between the components of the parking brake mechanism 117, but the elastic force of the disc springs 97 accumulated at the same time is released. The elastic force is applied to the loosening of the shoe spreading force to suppress the loss of the braking force. As a result, the loose stroke can be reduced.

Therefore, according to the drum brake device 100, 200, and 300 including the parking brake mechanisms 31, 99, and 117 according to the respective embodiments, it is possible to prevent the loosening of the shoe spreading force at the time of parking operation with high efficiency while preventing the motor gear unit 15 from being increased in size.

For example, although a case where the parking brake mechanism is motorized by the motor gear unit 15 is described in the above configuration example, the configuration of the present invention exhibits the same effect as the above description even when the configuration is applied to a manual parking brake mechanism.

### INDUSTRIAL APPLICABILITY

According to the drum brake device of the present invention, it is possible to provide a drum brake device including a parking brake mechanism capable of preventing loosening of the shoe spreading force at the time of parking operation with high efficiency while preventing a motor gear unit from being increased in size.

### REFERENCE SIGNS LIST

- 11: backing plate
- 17: first brake shoe (brake shoe)
- 19: second brake shoe (brake shoe)
- 30: brake drum
- 31: parking brake mechanism
- 33: adjuster
- 43: expansion/opening mechanism
- 49: operation lever
- 57: adjuster nut
- 59: adjuster screw
- 61: set member
- 63: adjuster socket
- 65: set plate
- 97: disc spring (elastic member)
- 100: drum brake device

## Claims

1. A drum brake device (100, 200, 300) comprising:
a parking brake mechanism (31) which includes:
a pair of brake shoes (17, 19) disposed in an expandable/openable manner on a surface parallel to a backing plate (11) so as to respectively face an inner peripheral surface of a brake drum (30);
an adjuster (33, 113, 125) interposed between adjacent ends of the pair of brake shoes (17, 19) on one side and automatically adjusting a shoe interval between the inner peripheral surface of the brake drum (30) and the brake shoes (17, 19); and
an expansion/opening mechanism (43) which is interposed between one of the pair of brake shoes (17, 19) and one end of the adjuster (33, 113, 125) and which expands and opens the pair of brake shoes (17, 19) by a thrust force of an operation lever (49) to which an external force is applied,
**characterized in that**
an elastic member (97) which bends along an expansion/opening direction of the pair of brake shoes (17, 19) and biases the pair of brake shoes (17, 19) in the expansion/opening direction at a time of a parking operation, is disposed in the adjuster (33, 113, 125).

2. The drum brake device (100, 200, 300) according to claim 1, wherein the elastic member (97) is energized and disposed.

3. The drum brake device (100, 200, 300) according to claim 2, wherein the adjuster (33, 113, 125) includes an adjuster nut (57, 115, 127) disposed on one side of the pair of brake shoes (17, 19), an adjuster screw (59) having one end screwed to the adjuster nut (57, 115, 127), a set member (61) screwed to the other end of the adjuster screw (59), and an adjuster socket (63, 131) disposed on the other side of the pair of brake shoes (17, 19), and
wherein the elastic member (97) is held in an energized state via a set plate (65) which forms a clearance in the axial direction between the set member (61) and the adjuster socket (63, 131).

4. The drum brake device (100, 200, 300) according to any one of claims 1 to 3, wherein the elastic member (97) is a disc spring (97).

## Patentansprüche

1. Trommelbrems-Vorrichtung (100, 200, 300), die umfasst:
einen Parkbremsen-Mechanismus (31), der enthält:
ein Paar Bremsbacken (17, 19), die so, dass sie gespreizt/geöffnet werden können, auf einer Fläche parallel zu einer Trägerplatte (11) so angeordnet sind, dass sie jeweils einer Innenumfangsfläche einer Bremstrommel (30) zugewandt sind;
eine Einstelleinrichtung (33, 113, 125), die zwischen benachbarten Enden der paarigen Bremsbacken (17, 19) an einer Seite angeordnet ist und automatisch einen Backenabstand zwischen der Innenumfangsfläche der Bremstrommel (30) und den Bremsbacken (17, 19) einstellt; sowie
einen Spreizungs-/Öffnungsmechanismus (43), der zwischen einer der paarigen Bremsbacken (17, 19) und einem Ende der Einstelleinrichtung (33, 113, 125) angeordnet ist und der die paarigen Bremsbacken (17, 19) mittels einer Druckkraft eines Betätigungshebels (49) spreizt und öffnet, auf den eine Kraft von außen ausgeübt wird,
**dadurch gekennzeichnet, dass**
ein elastisches Element (97), das sich in einer Spreizungs-/Öffnungsrichtung der paarigen Bremsbacken (17, 19) biegt und die paarigen Bremsbacken (17, 19) bei einem Parkvorgang in der Spreizungs-/Öffnungsrichtung vorspannt, in der Einstelleinrichtung (33, 113, 125) angeordnet ist.

2. Trommelbrems-Vorrichtung (100, 200, 300) nach Anspruch 1, wobei das elastische Element (97) gespannt und eingerichtet ist.

3. Trommelbremsvorrichtung (100, 200, 300) nach Anspruch 2, wobei die Einstelleinrichtung (33, 113, 125) eine Einstellmutter (57, 115, 127), die an einer Seite der paarigen Bremsbacken (17, 19) angeordnet ist, eine Einstellschraube (59), deren eines Ende in die Einstellmutter (57, 115, 127) eingeschraubt ist, ein Stellelement (61), das auf das andere Ende der Einstellschraube (59) aufgeschraubt ist, sowie eine Einstellbuchse (63, 131) einschließt, die an der anderen Seite der paarigen Bremsbacken (17, 19) angeordnet ist, und
das elastische Element (97) über eine Stellplatte (65) in einem gespannten Zustand gehalten wird, die einen Zwischenraum zwischen dem Stellglied (61) und der Einstellbuchse (63, 131) in der axialen Richtung bildet.

4. Trommelbrems-Vorrichtung (100, 200, 300) nach einem der Ansprüche 1 bis 3, wobei das elastische Element (97) eine Tellerfeder (97) ist.

## Revendications

1. Dispositif de frein à tambour (100, 200, 300) comprenant:
un mécanisme de frein de stationnement (31) qui comprend:
une paire de sabots de frein (17, 19) disposés de manière extensible/ ouvrable sur une surface parallèle à une plaque d'appui (11) de manière à faire face respectivement à une surface périphérique intérieure d'un tambour de frein (30);
un dispositif de réglage (33, 113, 125) interposé entre les extrémités adjacentes de la paire de sabots de frein (17, 19) sur un côté et ajustant automatiquement un intervalle de sabot entre la surface périphérique intérieure du tambour de frein (30) et les sabots de frein (17, 19); et
un mécanisme d'expansion/ouverture (43) qui est interposé entre l'une de la paire de mâchoires de frein (17, 19) et une extrémité du dispositif de réglage (33, 113, 125) et qui étend et ouvre la paire de mâchoires de frein (17, 19) par une force de poussée d'un levier d'actionnement (49) auquel une force externe est appliquée,
**caractérisé en ce que**
un élément élastique (97) qui se plie le long d'une direction d'expansion/ ouverture de la paire de sabots de frein (17, 19) et sollicite la paire de sabots de frein (17, 19) dans la direction d'expansion/ouverture au moment d'une opération de stationnement, est disposé dans le dispositif de réglage (33, 113, 125).

2. Dispositif de frein à tambour (100, 200, 300) selon la revendication 1, dans lequel l'élément élastique (97) est alimenté et disposé.

3. Dispositif de frein à tambour (100, 200, 300) selon la revendication 2, dans lequel le dispositif de réglage (33, 113, 125) comprend un écrou de réglage (57, 115, 127) disposé sur un côté de la paire de mâchoires de frein (17, 19), une vis de réglage (59) ayant une extrémité vissée à l'écrou de réglage (57, 115, 127), un élément de réglage (61) vissé à l'autre extrémité de la vis de réglage (59), et une douille de réglage (63, 131) disposée sur l'autre côté de la paire de mâchoires de frein (17, 19), et dans lequel l'élément élastique (97) est maintenu dans un état excité via une plaque de réglage (65) qui forme un jeu dans la direction axiale entre l'élément de réglage (61) et la douille de réglage (63, 131).

4. Dispositif de frein à tambour (100, 200, 300) selon l'une quelconque des revendications 1 à 3, dans lequel l'organe élastique (97) est un ressort à disque (97).
